(19) Europäisches Patentamt / European Patent Office / Office européen des brevets

(11) **EP 4 477 523 A1**

(12) **EUROPEAN PATENT APPLICATION**

(43) Date of publication:
**18.12.2024   Bulletin 2024/51**

(21) Application number: **24178743.1**

(22) Date of filing: **29.05.2024**

(51) International Patent Classification (IPC):
**B63B 1/28** (2006.01)      **B63B 39/06** (2006.01)
**G05D 1/495** (2024.01)

(52) Cooperative Patent Classification (CPC):
**B63B 1/285; B63B 39/06; G05D 1/495;
G05D 1/606;** G05D 2107/27; G05D 2109/34

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.06.2023   SE 2350689**

(71) Applicant: **Volvo Penta Corporation
405 08 Göteborg (SE)**

(72) Inventors:
• **LUNDGREN, Felix
  422 50 HISINGSBACKA (SE)**
• **HÖRBERG, Andreas
  413 23 GÖTEBORG (SE)**

(74) Representative: **Ström & Gulliksson AB
P.O. Box 4188
203 13 Malmö (SE)**

(54) **MARINE HYDROFOILING OPERATION CONTROL**

(57)    A computer system (150; 900) comprising processing circuitry (152; 902) configured to: obtain (S1) data indicative of a target total lift force ($F_{tot}$) to be generated by a front hydrofoil arrangement (120) of a marine vessel (100) and by a rear hydrofoil arrangement (130) of the marine vessel (100), wherein the target total lift force is associated with a constant heave (y) of the vessel (100); determine (S2) a lift force discrepancy between a current lift force of the vessel (100) and the target total lift force, based on a state of the rear hydrofoil arrangement (130); and adjust (S3) an angle of attack (AoA) of the front hydrofoil arrangement (120) to compensate for the lift force discrepancy.

FIG. 1

EP 4 477 523 A1

**Description**

**TECHNICAL FIELD**

The disclosure relates generally to marine vessels. In particular aspects, the disclosure relates to marine hydrofoiling operation control. The disclosure can be applied to marine vessels, such as leisure boats, ships, cruise ships, fishing vessels, yachts, ferries, among other vehicle types. Although the disclosure may be described with respect to a particular marine vessel, the disclosure is not restricted to any particular marine vessel

**BACKGROUND**

With the recent focus on electric propulsion systems in the marine industry, hydrofoils have gained renewed interest. Generally, hydrofoiling vessels utilize retractable wings or foils that, when extended at higher speeds, generate sufficient lift to elevate the hull out of the water. The hydrofoiling vessel thereby benefits from a higher lift-to-drag ratio, which implies that the vessel can be propelled with less energy compared to, for example, hull displacement vessels. In the past, hydrofoils were designed to be stable and fixed, meaning they did not require any external control. However, by making the attack angles of the wings in the hydrofoil system variable and thus potentially introducing instability in the system, it is possible to improve its performance. To fully utilize this type of variable attack angle hydrofoil system, control of the hydrofoiling operation is desired.

It is in view of the considerations above and others that the present inventors herein are suggesting one or more improvement to the prior art.

**SUMMARY**

A computer system is thus employed herein that involves processing circuitry for controlling the hydrofoiling operation, preferably in real-time. The computer system (sometimes also referred to as a hydrofoil flight controller) should be flexible and preferably able to control hydrofoiling operations on several different types of vessels, at different speeds, and in varying environmental conditions.

According to a first aspect of the disclosure, a computer system is provided. The computer system comprises processing circuitry configured to obtain data indicative of a target total lift force to be generated by a front hydrofoil arrangement of a marine vessel and by a rear hydrofoil arrangement of the marine vessel, wherein the target total lift force is associated with a constant heave of the vessel; determine a lift force discrepancy between a current lift force of the vessel and the target total lift force, based on a state of the rear hydrofoil arrangement; and adjust an angle of attack of the front hydrofoil arrangement to compensate for the lift force discrepancy. The first aspect of the disclosure may seek to enhance the stability and performance of marine vessels by dynamically adjusting hydrofoil configurations. A technical benefit may include improved vessel control and reduced energy consumption during navigation.

Optionally in some examples, including in at least one preferred example, the processing circuitry is configured to determine the target total lift force based on data indicative of a mass of the vessel, and a model of lift force by the front hydrofoil arrangement and by the rear hydrofoil arrangement. A technical benefit may include increased accuracy in maintaining desired vessel dynamics.

Optionally in some examples, including in at least one preferred example, the processing circuitry is further configured to determine the lift force discrepancy based on a current pitch of the vessel, a speed through water of the vessel, and a total rear lift force currently generated by the rear hydrofoil arrangement. A technical benefit may include enhanced responsiveness to changing environmental conditions and vessel states.

Optionally in some examples, including in at least one preferred example, the processing circuitry is further configured to determine a current lift force generated by the front hydrofoil arrangement, and a current lift force generated by the rear hydrofoil arrangement, respectively, as: $F_{L,front} = \dfrac{v^2 A_f \rho C_L(\beta_f)}{2}$ , and $F_{L,rear,tot} = F_{L,rear,1} + F_{L,rear,2} =$

$\dfrac{v^2 A_{r1} \rho C_L(\beta_{r1})}{2} + \dfrac{v^2 A_{r2} \rho C_L(\beta_{r2})}{2}$ , where v is a speed through water of the vessel, $A_f$, $A_{r1}$, and $A_{r2}$ are wing areas associated with the front hydrofoil arrangement and with the rear hydrofoil arrangement respectively, $\rho$ is a water density, $C_L(\cdot)$ is a lift coefficient as function of an attack angle, $\beta_f$, $\beta_{r1}$, $\beta_{r2}$, associated with the front hydrofoil arrangement, and with the rear hydrofoil arrangement, respectively.

Optionally in some examples, including in at least one preferred example, the processing circuitry is further configured to determine a desired set angle of the front hydrofoil arrangement, as:

$$\alpha_f = \frac{2(mg - F_{L,rear,tot})}{v^2 A_f \rho k} - \theta - \frac{c}{k}$$

, where m is vessel mass, *g* is a gravitational acceleration on Earth, $F_{L,rear,tot}$ is a current lift force generated by the rear hydrofoil arrangement, *v* is a speed through water of the vessel, $\rho$ is a water density, $A_f$ is a wing area of the front hydrofoil arrangement, $\theta$ is a pitch of the vessel, and where a lift coefficient $C_L$ of the front hydrofoil arrangement is approximated by a straight line given by $C_L \approx k\alpha_f + c$.

Optionally in some examples, including in at least one preferred example, the processing circuitry is further configured to control heave of the vessel to reduce a difference between a current vessel heave and a heave set-point by the front hydrofoil arrangement. A technical benefit may include improved stability and maneuverability of the vessel in various sea conditions. A technical benefit may include improved stability and maneuverability of the vessel in various sea conditions.

Optionally in some examples, including in at least one preferred example, the processing circuitry is further configured to control pitch of the vessel to reduce a difference between a current vessel pitch and a pitch set-point by the rear hydrofoil arrangement. A technical benefit may include improved stability and maneuverability of the vessel in various sea conditions.

Optionally in some examples, including in at least one preferred example, the processing circuitry is further configured to control roll of the vessel to reduce a difference between a current vessel roll and a roll set-point by the rear hydrofoil arrangement. A technical benefit may include improved stability and maneuverability of the vessel in various sea conditions.

Optionally in some examples, including in at least one preferred example, the processing circuitry is further configured to control the roll of the vessel based on a rudder turn angle. A technical benefit may include improved stability and maneuverability of the vessel in various sea conditions.

According to a second aspect of the disclosure, a marine vessel is provided. The marine vessel comprises a front hydrofoil arrangement, a rear hydrofoil arrangement, and the computer system according to the first aspect. This aspect seeks to integrate advanced hydrofoil management into marine vessel designs. A technical benefit may include enhanced vessel performance and passenger comfort by maintaining optimal hydrofoil configurations.

Optionally in some examples, including in at least one preferred example, the front hydrofoil arrangement and the rear hydrofoil arrangement are arranged to lift the marine vessel out of the water into a hydrofoiling state where a hull of the vessel is elevated from a nominal draught state to a state of reduced draught. A technical benefit may include reduced water resistance and increased vessel speed and efficiency during navigation.

According to a third aspect of the disclosure, a hydrofoiling system is provided. The hydrofoiling system comprises at least a front hydrofoil arrangement, a rear hydrofoil arrangement, and the computer system according to the first aspect. This aspect aims to provide a modular solution for retrofitting existing vessels or designing new hydrofoil-equipped vessels. A technical benefit may include versatility and adaptability in hydrofoil system implementations across different vessel types.

According to a fourth aspect of the disclosure, a computer-implemented method for controlling a hydrofoiling operation by a marine vessel is provided. The method comprises obtaining, by processing circuitry of a computer system, data indicative of a target total lift force to be generated by a front and rear hydrofoil arrangement of the marine vessel, determining a lift force discrepancy based on a state of the rear hydrofoil arrangement, and adjusting an angle of attack of the front hydrofoil arrangement to reduce the lift force discrepancy. This aspect seeks to implement the hydrofoil management strategies in a methodical manner. A technical benefit may include streamlined integration into existing vessel control systems.

According to a fifth aspect of the disclosure, a computer program product is provided. The computer program product comprises program code for performing the method of the fourth aspect when executed by the processing circuitry. This aspect seeks to provide a software solution that can be integrated into various marine vessel systems to enhance operational efficiency and performance. A technical benefit may include the ease of deployment across different computing platforms in marine vessels, enabling consistent and reliable hydrofoil management.

According to a sixth aspect of the disclosure, a non-transitory computer-readable storage medium is provided. The non-transitory computer-readable storage medium comprises instructions, which when executed by the processing circuitry, cause the processing circuitry to perform the method of the fourth aspect. This aspect aims to ensure that the methodologies for dynamic hydrofoil management are sustainably embedded within the vessel's control systems, providing long-term benefits. A technical benefit may include improved durability and reliability of the hydrofoil control system, reducing the need for frequent recalibrations or adjustments under varying operational conditions.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

## BRIEF DESCRIPTION OF THE DRAWINGS

Examples are described in more detail below with reference to the appended drawings.

FIG. 1 is an exemplary schematic illustration of a marine vessel arranged for hydrofoiling according to an example.

FIG. 2 is an exemplary diagram illustrating a relationship between lift coefficient and attack angle according to an example.

FIG. 3 is an exemplary block diagram illustration of a part of a control method according to an example.

FIG. 4 is an exemplary block diagram illustration of a control system for a hydrofoiling operation according to an example.

FIG. 5A show illustrative diagrams involving roll, pitch, and heave, in relation to respective setpoints in exemplary hydrofoiling operations according to an example.

FIG. 5B show illustrative diagrams involving roll, pitch, and heave, in relation to respective setpoints in exemplary hydrofoiling operations according to an example.

FIG. 5C show illustrative diagrams involving roll, pitch, and heave, in relation to respective setpoints in exemplary hydrofoiling operations according to an example.

FIG. 5D show illustrative diagrams involving roll, pitch, and heave, in relation to respective setpoints in exemplary hydrofoiling operations according to an example.

FIG. 5E show illustrative diagrams involving roll, pitch, and heave, in relation to respective setpoints in exemplary hydrofoiling operations according to an example.

FIG. 6 is an exemplary schematic illustration of a marine vessel arranged for hydrofoiling according to an example, the marine vessel including a hydrofoiling wand for measuring heave.

FIG. 7 is a flowchart of an exemplary method for controlling a hydrofoiling operation by a marine vessel according to an example.

FIG. 8 is a schematic diagram of an exemplary computer system for implementing examples disclosed herein, according to an example.

FIG. 9 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

The general concept as defined herein in the respective aspects of the disclosure may be applicable to vessels comprising more than two hydrofoil arrangements, such as a vessel comprising three or more hydrofoil arrangements, where each hydrofoil arrangement may comprise one or more hydrofoiling wings. The aspects determine a required total lift force by the hydrofoil arrangements in order to maintain a constant heave of the vessel hull relative to the water surface. This lift force requirement is then compared to a current lift force generated by the hydrofoil arrangements on the vessel, which is determined based on a state of the rear hydrofoil arrangement. Any discrepancy between required lift force and current lift force is then compensated for by the front hydrofoil arrangement. This means for instance that any effect on lift force caused by pitch motion generated by the rear hydrofoil arrangement is quickly compensated for by the front hydrofoil arrangement.

Thus, advantageously, pitch and heave are separated from each other, which simplifies control of the hydrofoiling operation. Both the total lift force requirement, i.e., the target total lift force, and the currently generated lift force are determined based on respective states of the hydrofoiling actuators and on models of lift force for the different hydrofoil arrangement. This can allow for a feed-forward control system with relatively low latency.

The aspects may for instance involve determining the target total lift force based on data indicative of a mass of the vessel, and on a model of lift force by the front hydrofoil arrangement and by the rear hydrofoil arrangement. Thus, the aspects can be conveniently tailored to a given vessel type and hull shape by adapting the mass parameter and the model of lift force. To this end, a sophisticated approach tailored to enhancing the stability and performance of marine vessels equipped with multiple hydrofoil arrangements may be provided. This system can also be beneficial for vessels featuring three or more hydrofoil arrangements, each potentially comprising multiple hydrofoiling wings. By managing the lift forces generated by these hydrofoils, the invention aims to maintain a constant heave of the vessel's hull relative to the water surface, irrespective of varying conditions and operational demands.

The approaches herein thus provide multiple hydrofoil arrangements to generate a distributed lift force that can be finely tuned to the vessel's center of gravity and dynamic loading conditions. Continuous monitoring of all hydrofoils, with a focus on the rear hydrofoil, can allow for real-time assessment of vessel dynamics. Discrepancies between required and actual lift forces can be quickly corrected by adjusting the front hydrofoil's angle of attack, effectively decoupling pitch control from heave stability. The feed-forward control strategy may also be enhanced by real-time data processing, which can ensure quick responses to changes in sea conditions, speed, or load distribution. This precise control over multiple hydrofoils may not only improves vessel stability, which is important for high-speed operations close to the water surface, but may also evenly distribute mechanical stress across the hydrofoils, extending their lifespan. Additionally, maintaining constant heave can enhance onboard comfort by minimizing vertical movements and increases safety by reducing risks associated with hydrofoil submersion or emergence. The solution works by customizations of performance based on specific vessel characteristics like type, hull shape, and weight.

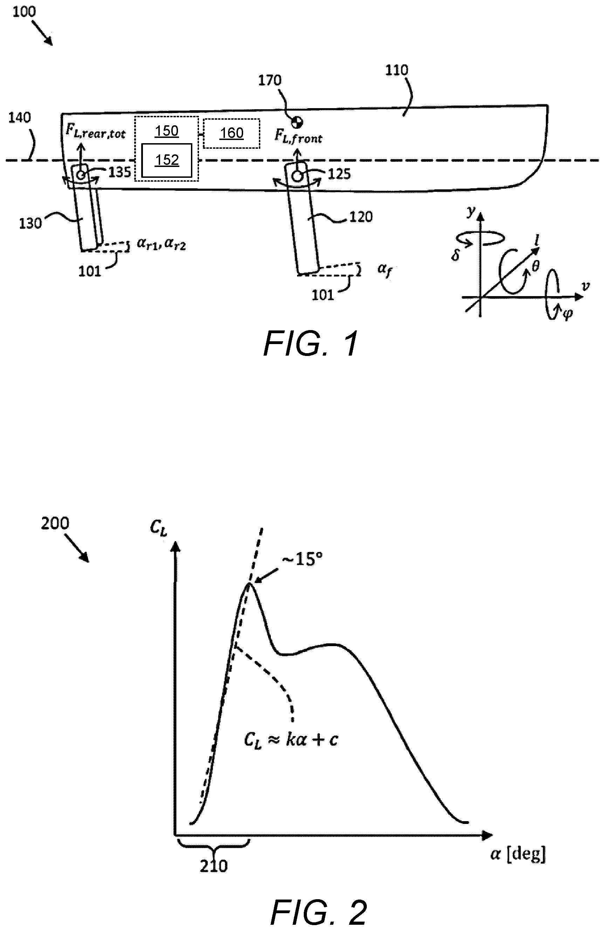

**FIG. 1** illustrates an exemplary marine vessel **100** arranged for hydrofoiling operation. The hull **110** of the vessel **100** comprises a front hydrofoil arrangement **120** and a rear hydrofoil arrangement **130.** In this particular example the front hydrofoil arrangement **120** comprises a single hydrofoil wing pivotable arranged about a front pivot point **125.** The rear hydrofoil arrangement according to the example in **FIG. 1** comprises left and right hydrofoil wings that can be controlled independently of each other. This is, for example, for purposes of generating yaw motion by the hull **110.** The rear hydrofoil arrangement **130** is arranged pivotable about a rear pivot point or points **135.** Each hydrofoil arrangement comprises at least one hydrofoiling wing supported by respective struts on the vessel hull. In other examples the rear or front hydrofoil arrangements **120, 130** may include one or more hydrofoils each.

One or more actuators are arranged to control the pivot angles of the front and rear hydrofoil arrangements. The configured angle of the front hydrofoil arrangement **120** relative to some reference plane, such as the horizontal plane **101,** referred to as the set angle below, is denoted $\alpha_f$. The rear hydrofoil arrangement **130** has respective configured angles relative to the reference plane denoted $\alpha_{r1}$ and $\alpha_{r2}$, respectively.

The longitudinal velocity of the vessel **100** is denoted $v$ and the lateral velocity of the vessel **100** is denoted $l$. The heave of the vessel, i.e., the height of the vessel **100** over the sea-level **140** is denoted $y$. Yaw angle relative to some reference direction is denoted $\delta$, pitch angle is denoted $\theta$, and roll angle is denoted $\varphi$, as illustrated in **FIG. 1.**

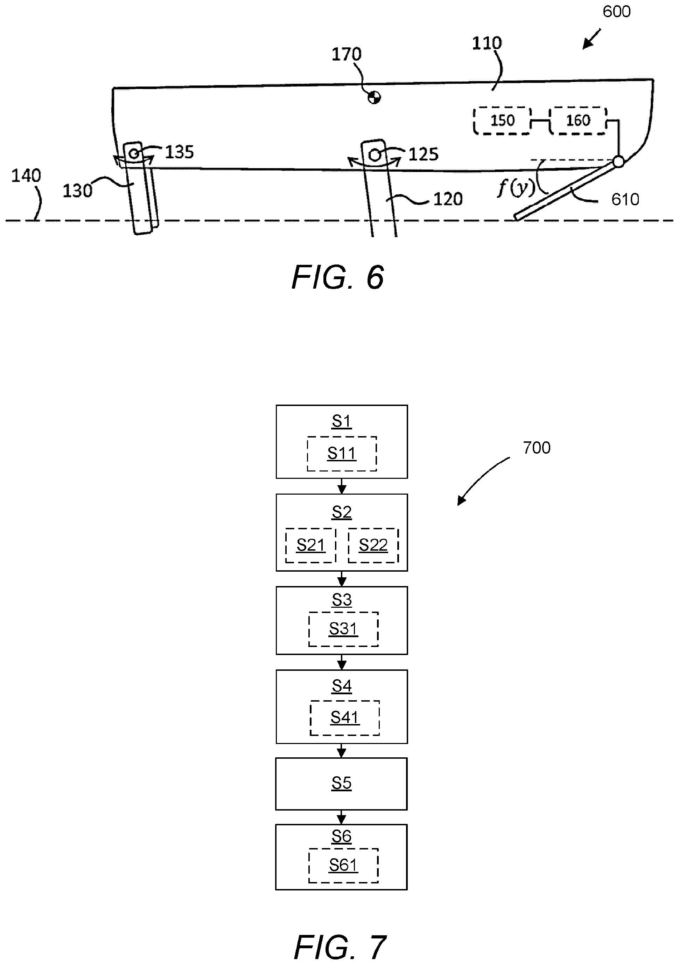

The hydrofoiling operations performed by the vessel **100** are controlled by processing circuitry **152** of a computer system **150.** The computer system **150** will be discussed in more detail below. The processing circuitry **152** may comprise a single processing device or a more than one processing device part of a distributed control system. The processing circuitry **152** is connected to one or more sensors that form part of a vessel motion sensor system **160.** These motion sensors may include but is not limited to including inertial measurement units (IMU), satellite positioning receivers such as GPS receivers, and speed logs arranged to determine the speed through water $v$ of the vessel **100.** The vessel motion sensor system **160** may also comprise one or more sonar sensors arranged to monitor a speed over ground of the vessel **100.** The IMU measures acceleration in the longitudinal and lateral directions, as well as vertical acceleration. The IMU may also comprise a gyro which provides rotations about the different reference axes. A hydrofoil wand, as illustrated in **FIG. 6,** can be used to determine the heave $y$ of the vessel **100** according to methodologies known in the art, such as wave height measurements to calculate vertical displacement, employing accelerometers to record heave motion, or utilizing GPS-based systems to track changes in elevation relative to a fixed reference point.

The vessel **100** has a mass or displacement which will be denoted $m$ herein. The mass is associated with a mass center **170.** The front hydrofoil arrangement **120** is located forward of the rear hydrofoil arrangement **130,** in the normal forward motion direction of the vessel. However, certain advantages are obtained if the front hydrofoil arrangement **120** is arranged in vicinity of the mass center **170** of the vessel, which is often somewhere around the longitudinal midpoint of the vessel **100.** The vessel mass $m$ may for example be determined from a water-line sensor which monitors how deep in the water the vessel lies when stationary. The vessel mass $m$ may also be preconfigured and assumed to be approximately constant.

It is appreciated that the vessel **100** illustrated in **FIG. 1,** and its hydrofoil arrangements **120, 130,** are general examples. The techniques of the present disclosure can be applied to other vessel types, with other hull shapes. The different methods for hydrofoiling operation disclosed herein can also be applied with other types of hydrofoil arrangements, such as arrangements comprising more than three hydrofoiling wings, and also with hydrofoil arrangements comprising a combination of controllable angle wings and fixed angle wings.

Hydrofoiling techniques have generated a new interest among boat makers, as they offer a new market opportunity for boat builders. It is important for boat builders to ensure that hydrofoil boats provide comfort in different conditions and maintain stability even when weight, such as people on board, is shifted around during driving. This puts a lot of effort on control mechanisms, which must maintain the boat's stability and robustness, while also allowing it to drive like a traditional boat at low speeds and transition into foiling mode at higher speeds. Additionally, the control mechanisms must keep track of the height above the water surface to maintain its level and comfort, even in the presence of waves or other disturbances. Boat builders therefore have an interest in developing control mechanisms that can handle these challenges.

The lift force $F_L$ of a hydrofoil arrangement and the drag force $F_D$ of a hydrofoil arrangement both play a role in the hydrofoiling operation. The lift force $F_L$ is especially important as it enables the hydrofoil to achieve lift force, allowing the boat to "fly" above the water surface. When the boat gains enough lift force, the hull starts to rise above the water surface (sometimes referred to as hull displacement mode )and with the attached submerged wings, the system transitions into airplane dynamics, rather than traditional boat dynamics. These forces can be modeled using equations that describe the behavior of fluid dynamics, such as the well-known Navier-Stokes equations.

The lift force $F_L$ can be derived from Bernoulli's principle, as well as other factors such as the surface area $A$ of the wing, the density $\rho$ of the fluid around the wing and the velocity $v$ of the fluid as it moves over the wing. The lift force is generated by pressure differences in the fluid surrounding the wing, which creates an upward force that lifts the hydrofoil. In contrast, the drag force $F_D$ creates a resistance force in the moving direction of the wing's motion. The lift force and the drag force may be determined, at least approximately, as:

$$F_L = \frac{C_L(\beta)v^2 A\rho}{2},$$

and

$$F_D = \frac{C_D(\beta)v^2 A\rho}{2},$$

where $v$ is the speed of the water as it moves over the wing, $A$ is the surface area of the wing, and $\rho$ is the density of the water. $C_L$ and $C_D$ are lift and drag coefficients, respectively, and they are functions of the attack angle $\beta$ of the wing. These coefficients depend on the angle of attack (AoA) $\beta$, generally in a non-linear manner. Understanding the lift and drag forces involved in the operation of a hydrofoil boat is important for developing an accurate control strategy.

The generation of lift and drag forces depend on the angle of attack $\beta$, which is determined by two angles: the vessel's pitch angle $\theta$ and the hydrofoils' set angles $\alpha$. The angle of attack of a hydrofoil wing is the angle between the wing chord line and the general direction of oncoming fluid flow. The vessel's orientation in relation to the reference plane (normally the horizontal plane) determines the pitch angle, and the set angle is determined by the actuator that rotates the strut attached to the hydrofoil, allowing for independent control of the AoA of each hydrofoil. Generally, for a hydrofoil arrangement, the AoA can be approximated as:

$$\beta \approx \theta + \alpha,$$

where $\theta$ is the pitch, and $\alpha$ is the set angle of the hydrofoil wing relative to some reference plane. With a constant increase in AoA, the lift coefficient will eventually pass its peak, entering what is known as the stall region, as illustrated in **FIG. 2.** Stalling occurs when the fluid flows across both sides of a wing separates, reducing lift force. The lift coefficient rapidly decreases as the drag coefficient begins to increase. This sudden reduction in lift can cause a critical loss in stability. It is worth noting that stalling in a hydrofoil boat is not as critical as in an airplane, because the boat travels close to the water surface.

A flight controller of a hydrofoil arrangement has three main states to regulate: roll $\varphi$, pitch $\theta$, and heave $y$. The time derivatives of the three states can also be controlled, as an option. The controller regulates these states by adjusting the set angles of the hydrofoil wings on the vessel. In the example of **FIG. 1,** three set angles are controlled - two at the rear hydrofoil arrangement **130** and one at the front hydrofoil arrangement **120.** However, as discussed above, any number of hydrofoil wings may be used, where each hydrofoil wing has a respective set angle to be regulated, unless the wing is a fixed hydrofoil wing which is also possible. Roll regulation of the hydrofoil system can be implemented independently, while pitch and heave control have a relation that causes their regulations to affect each other. This is due to the fact that a change in pitch also causes a change in AoAs of the hydrofoils, resulting in a shift in total lift force and heave height.

The processing circuitry **152** adapted to control the hydrofoiling operation according to teachings herein may incorporate an algorithm which is herein referred to as front foil compensation (FFC). This is an algorithm that determines a set angle for the front hydrofoil to prevent heave changes during pitch control.

The processing circuitry **152** for the hydrofoil arrangement on the vessel **100** (or on other vessels) may for example be implemented using a plurality of control loops, such as proportional-integral-derivative (PID) control loops. According to one example, the core of the processing circuitry **152** consists of three PID controllers, although other realizations are also possible. A PID controller is one of the most widely used controllers, and it includes an algorithm that calculates an error based on the difference between a desired setpoint and a feedback value of the state to be controlled in a known manner.

The processing circuitry **152** built around three PID controllers preferably controls roll, pitch, and heave by respective control loops. Roll and pitch are preferably controlled by the rear hydrofoils **130,** motivated by their further distance from the center of mass **170,** thus providing a longer moment arm. The front hydrofoil **120** regulates heave, motivated by its larger area, which generates more lift force compared to the rear hydrofoils. Furthermore, its proximity to the center of mass **170** makes it particularly suitable for translational motion.

FFC is an algorithm that aims to separate the link between pitch and heave control of the hydrofoiling operation. It does this by computing a difference angle or delta angle that the front hydrofoil arrangement **120** utilizes to compensate for the operations of the rear hydrofoil arrangement **130** on the heave by the vessel **100.** While the vessel **100** is foilborne, the rear and front hydrofoil arrangements **120, 130** have to generate a joint total lift force that is equal to the boat's gravitational pull force, to keep it at a constant heave. Since pitch and heave are controlled separately by their own regulators, they will not affect each other, at least not significantly, while FFC is active. The algorithm may, e.g., use the pitch and velocity of the vessel **100,** and the total lift force generated by the rear hydrofoil arrangement **130,** to calculate a desired set angle for the front hydrofoil arrangement **120.** To acquire the delta angle from the desired angle, the current set angle of the front hydrofoil arrangement **120** is used.

The desired angle of the front hydrofoil arrangement **120** is for instance derived from the lift force equation, the lift force coefficient, and from a force balance based on the total lift force $F_{tot}$ of the hydrofoil arrangements on the boat, as:

$$F_{tot} = mg = F_{L,front} + F_{L,rear,tot},$$

or

$$F_{L,front} = mg - F_{L,rear,tot},$$

where $m$ is the mass of the vessel **100,** $g$ is the gravitational acceleration on Earth, i.e., approximately 9.81 m/s$^2$, $F_{L,front}$ is the lift force generated by the front hydrofoil arrangement **120** and $F_{L,rear,tot}$ is the lift force generated by the rear hydrofoil arrangement **130.** The lift equation gives:

$$F_{L,front} = \frac{v^2 A_f \rho C_L(\beta_f)}{2},$$

where subscript $f$ on the wing area $A_f$ and AoA $\beta_f$ here denotes the front hydrofoil arrangement **120.** This relationship, when taken together with the relationship $F_{L,front} = mg - F_{L,rear,tot}$, gives:

$$C_L(\beta_f) = \frac{2(mg - F_{L,rear,tot})}{v^2 A_f \rho}$$

The lift coefficient can be approximated using the equation of a straight line:

$$C_L(\beta) \approx k\beta + c = k\theta + k\alpha + c,$$

where $k$ is the line gradient and $c$ is the height at which the line crosses the y-axis, also known as the y-intercept of the line.

The lift coefficient follows this straight line well in an initial span **210,** e.g., from zero to about 15 degrees AoA, which can be seen in the example **200** of **FIG. 2.** This is a span in which the AoA will almost always be in while the boat is foilborne.

Combining the above to solve for the desired set angle $\alpha_f$ of the front hydrofoil arrangement **120,** the following approximate relationship is obtained:

$$\alpha_f \approx \frac{2(mg - F_{L,rear,tot})}{v^2 A_f \rho k} - \theta - \frac{c}{k} \;.$$

After obtaining the desired set angle $\alpha_f$ of the front hydrofoil arrangement **120,** the delta angle, i.e., the set angle control adjustment for constant heave operation, can be calculated by subtracting by the current angle $\alpha_{current}$ of the front hydrofoil arrangement **120:**

$$\Delta\alpha = \alpha_f - \alpha_{current} \;.$$

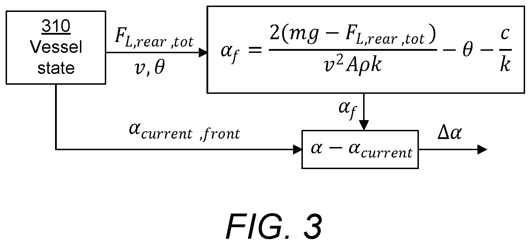

The FFC algorithm continues and sends its output to the front hydrofoil actuators, which can be thought of as setting the front hydrofoil arrangement **120** to a neutral angle (neutral as in not affecting heave), right before the heave control outputs its signal. The heave regulator will only increase or decrease the set angle of the front hydrofoil arrangement **120,** after FFC, depending on the boat's heave error. Thereby, FFC essentially gives the heave regulator a good angle to start acting from each update. The FFC algorithm is illustrated in one example by the block diagram **300** in **FIG. 3,** where the vessel state block **310** is a software module configured to maintain information relating to the state of the vessel **100** and also a model of lift force by the rear hydrofoil arrangement **130**. The vessel state block **310** provides data indicative of the speed through water $v$, the vessel pitch $\theta$ and the total rear lift force $F_{L,rear,tot}$ generated by the rear hydrofoil arrangement **130**.

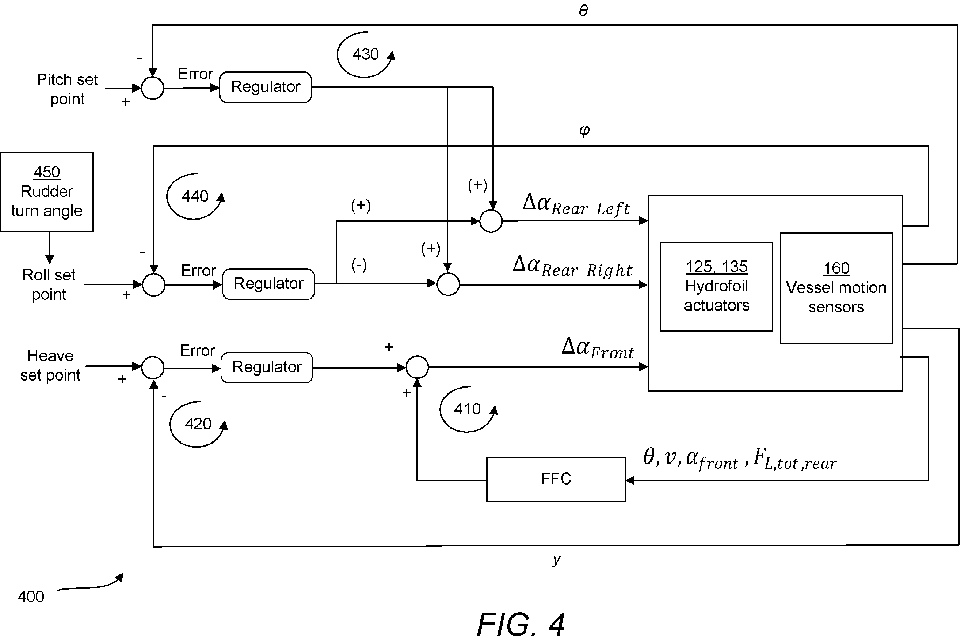

**FIG. 4** is a block diagram of an example control system **400** for controlling a hydrofoiling operation of a vessel, such as the vessel **100** in **FIG. 1.**

The FFC algorithm is here implemented as an inner loop **410** in the heave control part of the control system **400**. The inner loop **410** targets maintaining a constant heave, as discussed above, while an outer heave control loop **420** controls the set angle of the front hydrofoil arrangement **120** to reduce a difference between a current heave $y$ of the vessel **100** and a heave set point. The combination of inner loop **410** and outer loop **420** generates an adjustment $\Delta\alpha_{front}$ which is an incremental adjustment value that is sent to the front hydrofoil arrangement angle actuator.

A separate control loop **430** is used to control pitch $\theta$. This control loop is configured to control the states of the rear hydrofoil arrangement **130** and does not have an effect on the front hydrofoil arrangement **120**. The pitch control loop generates an adjustment $\Delta\alpha_{rear,left}$, $\alpha_{rear,right}$ for each of the rear hydrofoil wings in the rear hydrofoil arrangement **130**.

The roll of the vessel **100** is controlled by the control loop **440** and is configured to generate a roll motion by the vessel in dependence of a rudder turn angle **450**. The roll control loop also generates an adjustment $\Delta\alpha_{rear,left}$, $\alpha_{rear,right}$ for each of the rear hydrofoil wings in the rear hydrofoil arrangement **130**.

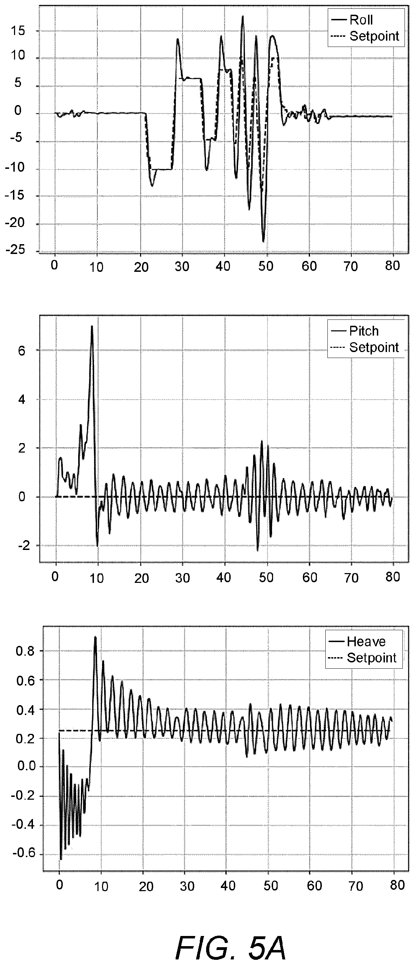

**FIGs. 5A-E** illustrate various performance examples of the hydrofoiling control techniques discussed herein. **FIGs. 5A-E** illustrate roll, pitch, and heave of the vessel **100** in response to various changes in the respective set points over time. The performance of the controllers discussed above have been evaluated by moving the weight center of the vessel **100** around, and by investigating performance during various wind and sea conditions.

**FIGs. 5A** illustrates a scenario with no extra weight added, with one person onboard the vessel **100,** and during calm sea conditions. The scenario comprises starting the boat from a stand-still, and by operating the boat at around cruising speed (24 knots), in a realistic manner.

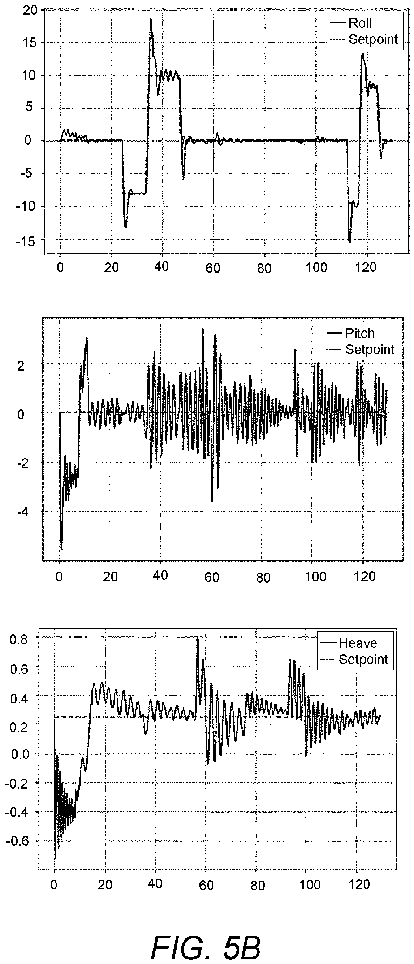

In **FIGs. 5B-D** a weight of 600kg loaded the vessel **100** (simulating eight passengers) and sea conditions were calm. The extra weight is loaded at different locations of the vessel **100**.

**FIG. 5B** shows a scenario where a front 600kg weight was added at 52s and at 90s seconds and removed at 58s and 98s seconds.

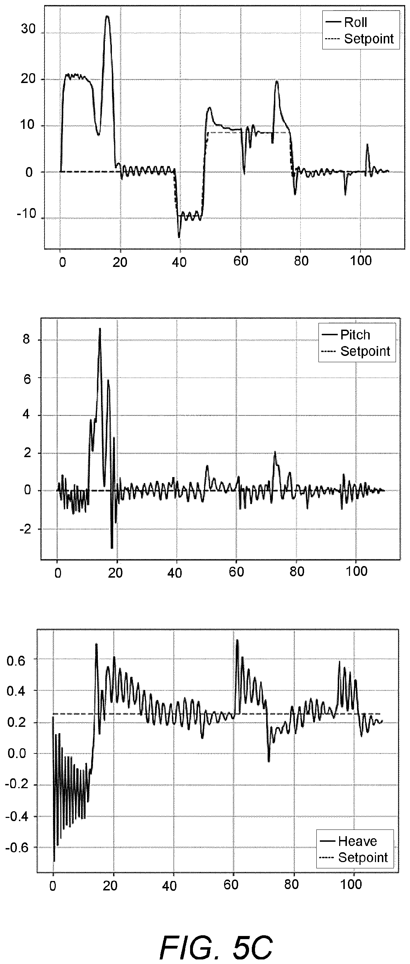

**FIG. 5C** shows a scenario where a side 600kg weight was added at 59s and at 93s seconds and removed at 69s and at 100s.

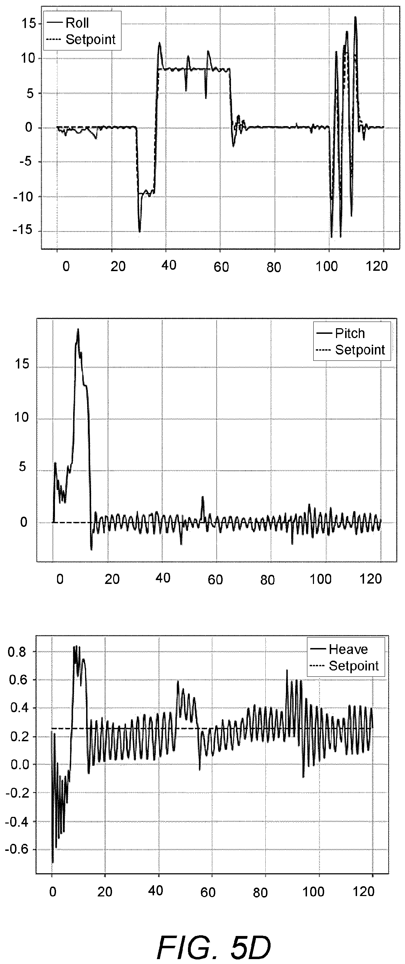

**FIG. 5D** shows a scenario where a rear 600kg weight was added at 45s and at 87s and removed at 54s and 93s seconds.

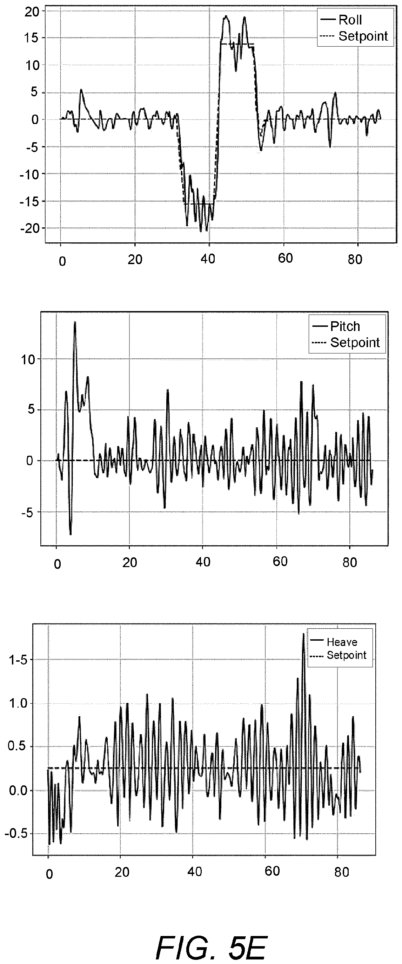

**FIG. 5E** illustrates controller performance with no extra weight and windy sea conditions. Windy sea conditions consist of a disturbing wind at 20 m/s that affects the boat by pushing it from different directions, while also generating larger waves on the simulated ocean surface. The pitch and heave indicate that the controller was not entirely successful in effectively controlling the hydrofoiling operation during windy conditions. The magnitudes of the oscillations are large, displaying poor control of the boat.

In **FIG. 6,** a marine vessel **600** comprising a sensor arrangement is shown. The sensor arrangement is for measuring the height above water level, i.e., the heave $y$. This arrangement is generally known as a hydrofoil wand and comprises an elongated member **610** or rod that is towed. The angle between the member **610** and the sea surface $f(\theta)$ is a function of the heave y of the vessel.

**FIG. 7** is a flowchart that illustrates a method **700**. The method **700** summarizes at least some of the examples herein. The method **700** is a computer-implemented method, and can be carried out by the processing circuitry **152** as discussed herein for controlling a hydrofoiling operation by the marine vessel **100** as discussed herein. The vessel **100** comprises a front hydrofoil arrangement **120** and a rear hydrofoil arrangement **130,** as exemplified in **FIG. 1.** The front hydrofoil arrangement **120** and the rear hydrofoil arrangement **130** are arranged to lift the vessel **100** out of the water into a hydrofoiling state where a hull of the vessel **100** is elevated from a nominal draught state to a state of reduced draught.

The method **700** comprises obtaining **S1** data indicative of a target total lift force $F_{tot}$ to be generated by the front hydrofoil arrangement **120** and by the rear hydrofoil arrangement **130,** where the target total lift force is associated with a constant heave $y$ of the vessel **100**. This target total lift force $F_{tot}$ is the lift force that counteracts forces that strive to bring the vessel closer to the sea surface, primarily the gravitational pull.

In some examples, the method **700** comprises determining **S11** the target total lift force $F_{tot}$ based on data indicative of a mass $m$ of the vessel **100,** and on a model of lift force by the front hydrofoil arrangement **120** and by the rear hydrofoil arrangement **130.** Different models of lift force can be used in the methods proposed herein. The models of lift force can be fixed or adaptive. An advantage of using adaptive models of lift force is that increased accuracy can be obtained, and also that the models can be tailored to better reflect actual lift force.

The method **700** comprises determining S2 a lift force discrepancy between a current lift force of the vessel **100** and the target total lift force, based on a state of the rear hydrofoil arrangement **130.** The current lift force of the vessel **100** can, e.g., be obtained from a motion model that is configured to model the lift force provided by the vessel **100,** given the current state of its actuators, such as the state of the front and the rear hydrofoil arrangements **120, 130.** The motion model can be parameterized by the properties of the different hydrofoil arrangements on the vessel **100,** such as the wing area and the AoA of each wing. Other properties such as the density of the surrounding seawater, and the speed of the water as it passes over the different wings of the hydrofoil arrangements **120, 130** on the vessel **100** is preferably also accounted for. The motion model can be at least in part determined based on physical models of reality, but it can also be adjusted as the vessel **100** is operated. This way the physical models can be made more accurate.

In some examples, the method **700** comprises determining S21 the lift force discrepancy based on a current pitch $\theta$ of the vessel **100,** a speed through water $v$ of the vessel **100,** and on a total rear lift force $F_{L,rear,tot}$ currently generated by the rear hydrofoil arrangement **130.** The method may for instance comprise determining S22 a current lift force of the front hydrofoil arrangement **120,** $F_{L,front,}$ and of the rear hydrofoil arrangement **130,** $F_{L,rear,tot}$, respectively, as:

$$F_{L,front} = \frac{v^2 A_f \rho C_L(\beta_f)}{2},$$

and

$$F_{L,rear,tot} = F_{L,rear,1} + F_{L,rear,2} = \frac{v^2 A_f \rho C_L(\beta_{r1})}{2} + \frac{v^2 A_f \rho C_L(\beta_{r2})}{2},$$

where $v$ is a speed through water of the vessel **100,** $A_f$, $A_{r1}$, and $A_{r2}$ are wing areas associated with the front hydrofoil arrangement **120** and with the rear hydrofoil arrangement **130** respectively, $\rho$ is a water density, $C_L(\cdot)$ is a lift coefficient as function of an attack angle, $\beta_f$, $\beta_{r1}$, $\beta_{r2}$, associated with the front hydrofoil arrangement **120** and with the rear hydrofoil arrangement **130** respectively.

Knowing the target total lift force $F_{tot}$ that is needed in order to maintain a constant heave, and the current lift force that is generated by the hydrofoil arrangements **120, 130** on the boat, the method **700** adjusts S3 an angle of attack (AoA) of the front hydrofoil arrangement **120** to reduce the lift force discrepancy, thus counteracting any actuation performed by the rear hydrofoil arrangement.

In some examples, the method **700** comprises determining S31 a desired set angle $\alpha_f$ of the front hydrofoil arrangement **120,** as:

$$\alpha_f = \frac{2(mg - F_{L,rear,tot})}{v^2 A_f \rho k} - \theta - \frac{c}{k} \ ,$$

where $m$ is vessel mass, $g$ is a gravitational acceleration on Earth, $F_{L,rear,tot}$ is a current lift force generated by the rear hydrofoil arrangement **130,** $v$ is a speed through water of the vessel **100,** $\rho$ is a water density, $A_f$ is a wing area of the front hydrofoil arrangement **120,** $\theta$ is a pitch of the vessel **100,** and where a lift coefficient $C_L$ of the front hydrofoil arrangement **120** is approximated by a straight line given by $C_L \approx k\alpha_f + c$.

In some examples, the method **700** comprises controlling S4 heave $y$ of the vessel **100** to reduce a difference between a current vessel heave and a heave set-point by the front hydrofoil arrangement **120.** The method **700** may for instance comprise controlling S41 heave $y$ of the vessel **100** by the front hydrofoil arrangement **120** to reduce the difference between current vessel heave and the heave set-point by a second control loop **420** external to the first control loop **410.**

According to some aspects, the method **700** comprises controlling S5 pitch $\theta$ of the vessel **100** to reduce a difference between a current vessel pitch and a pitch set-point by the rear hydrofoil arrangement **130.** The control of pitch $\theta$ can, for instance, be implemented in a separate loop **430** as exemplified in **FIG. 4.**

According to some aspects, the method **700** comprises controlling S6 roll $\varphi$ of the vessel **100** to reduce a difference between a current vessel roll and a roll set-point by the rear hydrofoil arrangement **130.** The control of roll $\varphi$ can, for instance, be implemented in a separate loop **440** as exemplified in **FIG. 4.** The method **700** may for instance comprise controlling S61 the roll $\varphi$ of the vessel **100** based on a rudder turn angle **450,** as illustrated in **FIG. 4.**

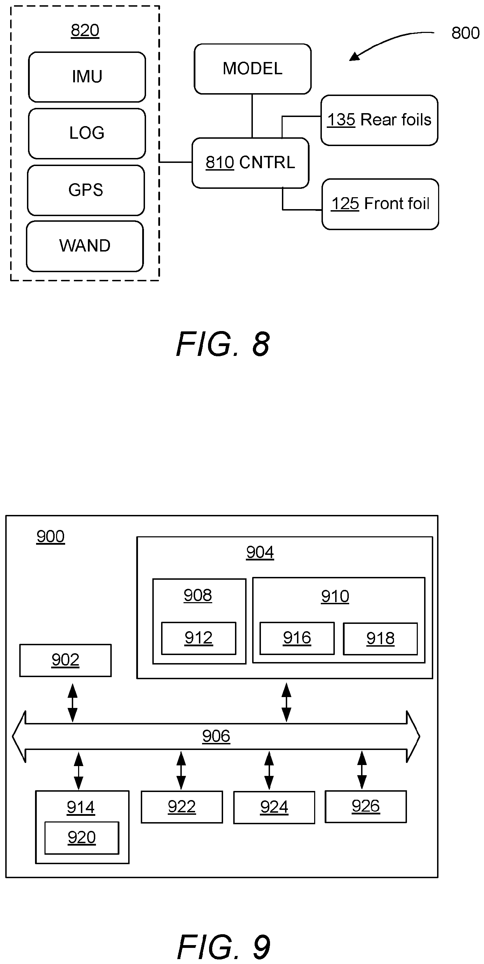

**FIG. 8** schematically illustrates an example **800** of a more general implementation of the techniques described herein. A control unit **810** receives sensor input data from one or more sensor units **820,** such as an IMU, a speed log, and a satellite positioning system. The control unit **810** then controls the set angle or set angles of at least a rear hydrofoil arrangement angle actuator **135** and a front hydrofoil arrangement angle actuator **125.**

FIG. 9 is a schematic diagram of a computer system **900** for implementing examples disclosed herein. The computer system **900** is adapted to execute instructions from a computer-readable medium to perform these and/or any of the functions or processing described herein. The computer system **900** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **900** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **900** may comprise at least one computing device or electronic device capable of including firmware, hardware, and/or executing software instructions to implement the functionality described herein. The computer system **900** may include processing circuitry **902** (e.g., processing circuitry including one or more processor devices or control units), a memory **904,** and a system bus **906.** The computer system **900** may include at least one computing device having the processing circuitry **902.** The system bus **906** provides an interface for system components including, but not limited to, the memory **904** and the processing circuitry **902.** The processing circuitry **902** may include any number of hardware components for conducting data or signal processing or for executing computer code stored in memory **904.** The processing circuitry **902** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **902** may further include computer executable code that controls operation of the programmable device.

The system bus **906** may be any of several types of bus structures that may further interconnect to a memory bus (with or without a memory controller), a peripheral bus, and/or a local bus using any of a variety of bus architectures. The memory **904** may be one or more devices for storing data and/or computer code for completing or facilitating methods described herein. The memory **904** may include database components, object code components, script components, or other types of information structure for supporting the various activities herein. Any distributed or local memory device may be utilized with the systems and methods of this description. The memory **904** may be communicably connected to the processing circuitry **902** (e.g., via a circuit or any other wired, wireless, or network connection) and may include computer code for executing one or more processes described herein. The memory **904** may include non-volatile memory **908** (e.g., read-only memory (ROM), erasable programmable read-only memory (EPROM), electrically erasable programmable read-only memory (EEPROM), etc.), and volatile memory **910** (e.g., random-access memory (RAM)), or any other medium which can be used to carry or store desired program code in the form of machine-executable instructions or data structures and which can be accessed by a computer or other machine with processing circuitry **902.** A basic input/output system (BIOS) **912** may be stored in the non-volatile memory **908** and can include the basic routines that help to transfer information between elements within the computer system **900.**

The computer system **900** may further include or be coupled to a non-transitory computer-readable storage medium such as the storage device **914,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **914** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **914** and/or in the volatile memory **910,** which may include an operating system **916** and/or one or more program modules **918.** All or a portion of the examples disclosed herein may be implemented as a computer program **920** stored on a transitory or non-transitory computer-usable or computer-readable storage medium (e.g., single medium or multiple media), such as the storage device **914,** which includes complex programming instructions (e.g., complex computer-readable program code) to cause the processing circuitry **902** to carry out actions described herein. Thus, the computer-readable program code of the computer program **920** can comprise software instructions for implementing the functionality of the examples described herein when executed by the processing circuitry **902**. In some examples, the storage device **914** may be a computer program product (e.g., readable storage medium) storing the computer program **920** thereon, where at least a portion of a computer program **920** may be loadable (e.g., into a processor) for implementing the functionality of the examples described herein when executed by the processing circuitry **902**. The processing circuitry **902** may serve as a controller or control system for the computer system **900** that is to implement the functionality described herein.

The computer system **900** may include an input device interface **922** configured to receive input and selections to be communicated to the computer system **900** when executing instructions, such as from a keyboard, mouse, touch-sensitive surface, etc. Such input devices may be connected to the processing circuitry **902** through the input device interface **922** coupled to the system bus **906** but can be connected through other interfaces, such as a parallel port, an Institute of Electrical and Electronic Engineers (IEEE) 1394 serial port, a Universal Serial Bus (USB) port, an IR interface, and the like. The computer system **900** may include an output device interface **924** configured to forward output, such as to a display, a video display unit (e.g., a liquid crystal display (LCD) or a cathode ray tube (CRT)). The computer system **900** may include a communications interface **926** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system comprising processing circuitry configured to: obtain data indicative of a target total lift force to be generated by a front hydrofoil arrangement of a marine vessel and by a rear hydrofoil arrangement of the marine vessel, wherein the target total lift force is associated with a constant heave of the vessel; determine a lift force discrepancy between a current lift force of the vessel and the target total lift force, based on a state of the rear hydrofoil arrangement; and adjust an angle of attack of the front hydrofoil arrangement to compensate for the lift force discrepancy.

Example 2: The computer system of Example 1, wherein the processing circuitry is configured to determine the target total lift force based on: data indicative of a mass of the vessel, and a model of lift force by the front hydrofoil arrangement and by the rear hydrofoil arrangement.

Example 3: The computer system of any of Examples 1-2, wherein the processing circuitry is further configured to determine the lift force discrepancy based on: a current pitch of the vessel, a speed through water of the vessel, and a total rear lift force currently generated by the rear hydrofoil arrangement.

Example 4: The computer system of any of Examples 1-3, wherein the processing circuitry is further configured to determine a current lift force generated by the front hydrofoil arrangement, and a current lift force generated by the rear

$$F_{L,front} = \frac{v^2 A_f \rho C_L(\beta_f)}{2}$$

hydrofoil arrangement, respectively, as: as: , and $F_{L,rear,tot} = F_{L,rear,1} + F_{L,rear,2} =$

$\frac{v^2 A_{r1} \rho C_L(\beta_{r1})}{2} + \frac{v^2 A_{r2} \rho C_L(\beta_{r2})}{2}$ , where v is a speed through water of the vessel, $A_f$, $A_{r1}$, and $A_{r2}$ are wing areas associated with the front hydrofoil arrangement and with the rear hydrofoil arrangement respectively, $\rho$ is a water density, $C_L(\cdot)$ is a lift coefficient as function of an attack angle, $\beta_f$, $\beta_{r1}$, $\beta_{r2}$, associated with the front hydrofoil arrangement, and with the rear hydrofoil arrangement, respectively.

Example 5: The computer system of any of Examples 1-4, wherein the processing circuitry is further configured to

$$\alpha_f = \frac{2(mg - F_{L,rear,tot})}{v^2 A_f \rho k} - \theta - \frac{c}{k}$$

determine a desired set angle of the front hydrofoil arrangement, as: , where *m* is vessel mass, *g* is a gravitational acceleration on Earth, $F_{L,rear,tot}$ is a current lift force generated by the rear hydrofoil arrangement, *v* is a speed through water of the vessel, $\rho$ is a water density, $A_f$ is a wing area of the front hydrofoil arrangement, $\theta$ is a pitch of the vessel, and where a lift coefficient $C_L$ of the front hydrofoil arrangement is approximated by a straight line given by $C_L \approx k\alpha_f + c$.

Example 6: The computer system of any of Examples 1-5, wherein the processing circuitry is further configured to control heave of the vessel to reduce a difference between a current vessel heave and a heave set-point by the front hydrofoil arrangement.

Example 7: The computer system of any of Examples 1-6, wherein the processing circuitry is further configured to control pitch of the vessel to reduce a difference between a current vessel pitch and a pitch set-point by the rear hydrofoil arrangement.

Example 8: The computer system of any of Examples 1-7, wherein the processing circuitry is further configured to control roll of the vessel to reduce a difference between a current vessel roll and a roll set-point by the rear hydrofoil arrangement.

Example 9: The computer system of Example 8, wherein the processing circuitry is further configured to control the roll of the vessel based on a rudder turn angle.

Example 10: A marine vessel comprising a front hydrofoil arrangement, a rear hydrofoil arrangement, and the computer system according to any of Examples 1-9.

Example 11: The marine vessel of Example 10, wherein the front hydrofoil arrangement and the rear hydrofoil arrangement are arranged to lift the marine vessel out of the water into a hydrofoiling state where a hull of the vessel is elevated from a nominal draught state to a state of reduced draught.

Example 12: A hydrofoiling system comprising at least a front hydrofoil arrangement, a rear hydrofoil arrangement, and the computer system according to any of Examples 1-9.

Example 13: A computer-implemented method for controlling a hydrofoiling operation by a marine vessel, comprising: obtaining, by processing circuitry of a computer system, data indicative of a target total lift force to be generated by a front hydrofoil arrangement of the marine vessel and by a rear hydrofoil arrangement of the marine vessel, wherein the target total lift force is associated with a constant heave of the vessel; determining, by the processing circuitry, a lift force discrepancy between a current lift force of the vessel and the target total lift force, based on a state of the rear hydrofoil arrangement; and adjusting an angle of attack of the front hydrofoil arrangement to reduce the lift force discrepancy.

Example 14: A computer program product comprising program code for performing, when executed by the processing circuitry, the method of Example 13.

Example 15: A non-transitory computer-readable storage medium comprising instructions, which when executed by the processing circuitry, cause the processing circuitry to perform the method of Example 13.

Example 16: A computer implemented method, performed by a control unit for controlling a hydrofoiling operation by a marine vessel, the vessel comprising at least a front hydrofoil arrangement and a rear hydrofoil arrangement, the method comprising: obtaining data indicative of a target total lift force to be generated by the front hydrofoil arrangement and by the rear hydrofoil arrangement, where the target total lift force is associated with a constant heave of the vessel, determining a lift force discrepancy between a current lift force of the vessel and the target total lift force, based on a state of the rear hydrofoil arrangement, and adjusting an angle of attack of the front hydrofoil arrangement to reduce the lift force discrepancy.

Example 17: The computer implemented method according to Example 16, comprising determining the target total lift force based on data indicative of a mass of the vessel, and on a model of lift force by the front hydrofoil arrangement and by the rear hydrofoil arrangement.

Example 18: The computer implemented method according to Example 16 or 17, comprising determining the lift force discrepancy based on a current pitch of the vessel, a speed through water of the vessel, and on a total rear lift force currently generated by the rear hydrofoil arrangement.

Example 19: The computer implemented method according to any previous Example, comprising determining a current lift force of the front hydrofoil arrangement, and of the rear hydrofoil arrangement, respectively, as

$$F_{L,front} = \frac{v^2 A_f \rho C_L(\beta_f)}{2}$$
, $F_{L,rear,tot} = F_{L,rear,1} +$ $F_{L,rear,2} = \frac{v^2 A_{r1} \rho C_L(\beta_{r1})}{2} + \frac{v^2 A_{r2} \rho C_L(\beta_{r2})}{2}$, where v is a speed through water of the vessel, wing areas are associated with the front hydrofoil arrangement and with the rear hydrofoil arrangement respectively, is a water density, is a lift coefficient as function of an attack angle, associated with the front hydrofoil arrangement and with the rear hydrofoil arrangement respectively.

Example 20: The computer implemented method according to any previous Example, comprising determining a desired

$$\alpha_f = \frac{2(mg - F_{L,rear,tot})}{v^2 A_f \rho k} - \theta - \frac{c}{k}$$

set angle of the front hydrofoil arrangement, as , where m is vessel mass, g is a gravitational acceleration on Earth, is a current lift force generated by the rear hydrofoil arrangement, v is a speed through water of the vessel, is a water density, wing area of the front hydrofoil arrangement, is a pitch of the vessel, and where a lift coefficient of the front hydrofoil arrangement is approximated by a straight line given by $C_L \approx k\alpha_f + c$.

Example 21: The computer implemented method according to any previous Example, comprising controlling heave of the vessel to reduce a difference between a current vessel heave and a heave set-point by the front hydrofoil arrangement.

Example 22: The computer implemented method according to Example 21, comprising controlling heave of the vessel by the front hydrofoil arrangement to reduce the difference between current vessel heave and the heave set-point by a second control loop external to the first control loop.

Example 23: The computer implemented method according to any previous Example, comprising controlling pitch of the vessel to reduce a difference between a current vessel pitch and a pitch set-point by the rear hydrofoil arrangement.

Example 24: The computer implemented method according to any previous Example, comprising controlling roll of the vessel to reduce a difference between a current vessel roll and a roll set-point by the rear hydrofoil arrangement.

Example 25: The computer implemented method according to Example 24, comprising controlling the roll of the vessel based on a rudder turn angle.

Example 26: The computer implemented method according to any previous Example, where the front hydrofoil arrangement and the rear hydrofoil arrangement are arranged to lift the vessel out of the water into a hydrofoiling state where a hull of the vessel is elevated from a nominal draught state to a state of reduced draught.

Example 27: A computer program product comprising program code for performing, when executed by processing circuitry, the method of any previous Example.

Example 28: A non-transitory computer-readable storage medium comprising instructions, which when executed by processing circuitry, cause the processing circuitry to perform the method of any of Examples 16-26.

Example 29: A control unit for controlling a hydrofoiling operation by a marine vessel, the vessel comprising a front hydrofoil arrangement and a rear hydrofoil arrangement, the control unit comprising processing circuitry configured to: obtain data indicative of a target total lift force to be generated by the front hydrofoil arrangement and by the rear hydrofoil arrangement, where the target total lift force is associated with a constant heave of the vessel, determine a lift force discrepancy between a current lift force of the vessel and the target total lift force, based on a state of the rear hydrofoil arrangement, and adjust an angle of attack of the front hydrofoil arrangement to compensate for the lift force discrepancy.

Example 30: A marine vessel comprising a front hydrofoil arrangement, a rear hydrofoil arrangement, and a control unit according to Example 29.

Example 31: A hydrofoiling system comprising at least a front hydrofoil arrangement, a rear hydrofoil arrangement, and a control unit according to Example 29.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A computer system (150; 900) comprising processing circuitry (152; 902) configured to:

   obtain data indicative of a target total lift force ($F_{tot}$) to be generated by a front hydrofoil arrangement (120) of a marine vessel (100) and by a rear hydrofoil arrangement (130) of the marine vessel (100), wherein the target total lift force is associated with a constant heave (y) of the vessel (100);

determine a lift force discrepancy between a current lift force of the vessel (100) and the target total lift force, based on a state of the rear hydrofoil arrangement (130); and

adjust an angle of attack (AoA) of the front hydrofoil arrangement (120) to compensate for the lift force discrepancy.

2. The computer system (150; 900) of claim 1, wherein the processing circuitry (152; 902) is configured to determine the target total lift force ($F_{tot}$) based on:

data indicative of a mass (m) of the vessel (100), and
a model of lift force by the front hydrofoil arrangement (120) and by the rear hydrofoil arrangement (130).

3. The computer system (150; 900) of any of claims 1-2, wherein the processing circuitry (152; 902) is further configured to determine the lift force discrepancy based on:

a current pitch ($\theta$) of the vessel (100),
a speed through water (v) of the vessel (100), and
a total rear lift force ($F_{L,rear,tot}$) currently generated by the rear hydrofoil arrangement (130).

4. The computer system (150; 900) of any of claims 1-3, wherein the processing circuitry (152; 902) is further configured to determine a current lift force $F_{L,front}$ generated by the front hydrofoil arrangement (120), and a current lift force $F_{L,rear,tot}$ generated by the rear hydrofoil arrangement (130), respectively, as:

$$F_{L,front} = \frac{v^2 A_f \rho C_L(\beta_f)}{2},$$

and

$$F_{L,rear,tot} = F_{L,rear,1} + F_{L,rear,2} = \frac{v^2 A_{r1} \rho C_L(\beta_{r1})}{2} + \frac{v^2 A_{r2} \rho C_L(\beta_{r2})}{2},$$

where v is a speed through water of the vessel (100), $A_f$, $A_{r1}$, and $A_{r2}$ are wing areas associated with the front hydrofoil arrangement (120) and with the rear hydrofoil arrangement (130) respectively, $\rho$ is a water density, $C_L(\cdot)$ is a lift coefficient as function of an attack angle, $\beta_f$, $\beta_{r1}$, $\beta_{r2}$, associated with the front hydrofoil arrangement (120), and with the rear hydrofoil arrangement (130), respectively.

5. The computer system (150; 900) of any of claims 1-4, wherein the processing circuitry (152; 902) is further configured to determine a desired set angle ($\alpha_f$) of the front hydrofoil arrangement (120), as:

$$\alpha_f = \frac{2\left(mg - F_{L,rear,tot}\right)}{v^2 A_f \rho k} - \theta - \frac{c}{k},$$

where $m$ is vessel mass, $g$ is a gravitational acceleration on Earth, $F_{L,rear,tot}$ is a current lift force generated by the rear hydrofoil arrangement (130), $v$ is a speed through water of the vessel (100), $\rho$ is a water density, $A_f$ is a wing area of the front hydrofoil arrangement (120), $\theta$ is a pitch of the vessel (100), and where a lift coefficient $C_L$ of the front hydrofoil arrangement (120) is approximated by a straight line given by $C_L \approx k\alpha_f + c$.

6. The computer system (150; 900) of any of claims 1-5, wherein the processing circuitry (152; 902) is further configured to control heave (y) of the vessel (100) to reduce a difference between a current vessel heave and a heave set-point by the front hydrofoil arrangement (120).

7. The computer system (150; 900) of any of claims 1-6, wherein the processing circuitry (152; 902) is further configured to control pitch ($\theta$) of the vessel (100) to reduce a difference between a current vessel pitch and a pitch set-point by the rear hydrofoil arrangement (130).

8. The computer system (150; 900) of any of claims 1-7, wherein the processing circuitry (152; 902) is further configured to control roll ($\varphi$) of the vessel (100) to reduce a difference between a current vessel roll and a roll set-point by the rear hydrofoil arrangement (130).

9.   The computer system (150; 900) of claim 8, wherein the processing circuitry (152; 902) is further configured to control the roll ($\varphi$) of the vessel (100) based on a rudder turn angle (450).

10.  A marine vessel (100) comprising a front hydrofoil arrangement (120), a rear hydrofoil arrangement (130), and the computer system (150; 900) according to any of claims 1-9.

11.  The marine vessel (100) of claim 10, wherein the front hydrofoil arrangement (120) and the rear hydrofoil arrangement (130) are arranged to lift the marine vessel (100) out of the water into a hydrofoiling state where a hull of the vessel (100) is elevated from a nominal draught state to a state of reduced draught.

12.  A hydrofoiling system comprising at least a front hydrofoil arrangement (120), a rear hydrofoil arrangement (130), and the computer system (150; 900) according to any of claims 1-9.

13.  A computer-implemented method (700) for controlling a hydrofoiling operation by a marine vessel (100), comprising:

obtaining (S1), by processing circuitry (152; 902) of a computer system (150; 900), data indicative of a target total lift force ($F_{tot}$) to be generated by a front hydrofoil arrangement (120) of the marine vessel (100) and by a rear hydrofoil arrangement (130) of the marine vessel (100), wherein the target total lift force is associated with a constant heave (y) of the vessel (100);
determining (S2), by the processing circuitry (152; 902), a lift force discrepancy between a current lift force of the vessel (100) and the target total lift force, based on a state of the rear hydrofoil arrangement (130); and
adjusting (S3) an angle of attack (AoA) of the front hydrofoil arrangement (120) to reduce the lift force discrepancy.

14.  A computer program product comprising program code for performing, when executed by the processing circuitry, the method (7007) of claim 13.

15.  A non-transitory computer-readable storage medium comprising instructions, which when executed by the processing circuitry, cause the processing circuitry to perform the method (700) of claim 13.

FIG. 1

FIG. 2

$$\alpha_f = \frac{2(mg - F_{L,rear,tot})}{v^2 A \rho k} - \theta - \frac{c}{k}$$

FIG. 3

FIG. 4

EP 4 477 523 A1

18

FIG. 5A

FIG. 5B

*FIG. 5C*

FIG. 5D

FIG. 5E

600

170   110

150   160

135   125

140   130   120   $f(y)$   610

## FIG. 6

700

S1
S11

S2
S21   S22

S3
S31

S4
S41

S5

S6
S61

## FIG. 7

820

IMU

LOG

GPS

WAND

MODEL

800

135 Rear foils

810 CNTRL

125 Front foil

## FIG. 8

900

904

908

912

910

916

918

902

906

914

920

922

924

926

## FIG. 9

Europäisches
Patentamt

European
Patent Office

Office européen
des brevets

# EUROPEAN SEARCH REPORT

**Application Number**

EP 24 17 8743

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HÖRBERG ANDREAS ET AL: "Flight Control System for a Hydrofoil Boat : Controller development by performance analysis in the Unity simulation environment", MASTER'S THESIS IN SYSTEMS, CONTROL AND MECHATRONICS, 1 January 2023 (2023-01-01), pages 1-62, XP093170675, Gothenburg, Sweden * the whole document * | 1-15 | INV. B63B1/28 B63B39/06 G05D1/495 |
| X | BENCATEL RICARDO ET AL: "Full State Feedback Foiling Control for America's Cup Catamarans", IEEE TRANSACTIONS ON CONTROL SYSTEMS TECHNOLOGY, IEEE SERVICE CENTER, NEW YORK, NY, US, vol. 29, no. 1, 3 January 2020 (2020-01-03), pages 1-17, XP011826865, ISSN: 1063-6536, DOI: 10.1109/TCST.2019.2955059 [retrieved on 2020-12-16] * the whole document * | 1,10-15 | |
| X | DE 10 2018 112052 A1 (IFM ELECTRONIC GMBH [DE]) 21 November 2019 (2019-11-21) * claims; figures * | 1-15 | TECHNICAL FIELDS SEARCHED (IPC) B63B G05D |
| X | EP 3 885 247 B1 (INESSE CORP LTD [IT]) 3 May 2023 (2023-05-03) * claims; figures * | 1,10-15 | |
| X | US 3 886 884 A (STARK DONALD R ET AL) 3 June 1975 (1975-06-03) * claims; figures * | 1,10-15 | |

-/--

The present search report has been drawn up for all claims

| Place of search | Date of completion of the search | Examiner |
|---|---|---|
| The Hague | 6 November 2024 | Schmitter, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 175 526 A (JOHNSON JR JOHN M ET AL) 30 March 1965 (1965-03-30) * claims; figures * ----- | 1,10-15 | |

TECHNICAL FIELDS
SEARCHED        (IPC)

The present search report has been drawn up for all claims

| Place of search | Date of completion of the search | Examiner |
|---|---|---|
| The Hague | 6 November 2024 | Schmitter, Thierry |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 17 8743

This annex lists the patent family members relating to the patent documents cited in  the above-mentioned European search report.
The members are as contained in the European Patent Office EDP file on
The European Patent Office is in no way liable for these particulars which are merely given for the purpose of information.

06-11-2024

| Patent document cited in search report | Publication date | Patent family member(s) | | Publication date |
|---|---|---|---|---|
| DE 102018112052 A1 | 21-11-2019 | NONE | | |
| EP 3885247 B1 | 03-05-2023 | NONE | | |
| US 3886884 A | 03-06-1975 | BE | 798903 A | 30-10-1973 |
| | | DE | 2337995 A1 | 09-05-1974 |
| | | ES | 414229 A1 | 16-01-1976 |
| | | FR | 2205220 A5 | 24-05-1974 |
| | | GB | 1381436 A | 22-01-1975 |
| | | IT | 980392 B | 30-09-1974 |
| | | JP | S4980795 A | 03-08-1974 |
| | | JP | S5337636 B2 | 11-10-1978 |
| | | NL | 7305749 A | 02-05-1974 |
| | | SE | 399031 B | 30-01-1978 |
| | | US | 3886884 A | 03-06-1975 |
| US 3175526 A | 30-03-1965 | GB | 934094 A | 14-08-1963 |
| | | US | 3175526 A | 30-03-1965 |

EPO FORM P0459

For more details about this annex : see Official Journal of the European Patent Office, No. 12/82